## Europäisches Patentamt
## European Patent Office
## Office européen des brevets

(19)

(11) Numéro de publication: **0 296 964**
**B1**

(12) **FASCICULE DE BREVET EUROPEEN**

(45) Date de publication du fascicule du brevet:
**12.12.90**

(51) Int. Cl.⁵: **B64C 27/46**

(21) Numéro de dépôt: **88401560.3**

(22) Date de dépôt: **21.06.88**

(54) **Pale en matériaux composites, à noyau structural et revêtement d'habillage profilé, et son procédé de fabrication.**

(30) Priorité: **26.06.87 FR 8709078**

(43) Date de publication de la demande:
**28.12.88 Bulletin 88/52**

(45) Mention de la délivrance du brevet:
**12.12.90 Bulletin 90/50**

(84) Etats contractants désignés:
**DE ES GB IT NL**

(56) Documents cités:
**DE-A- 2 558 882**
**GB-A- 2 041 829**

(73) Titulaire: **AEROSPATIALE Société Nationale Industrielle, 37, Boulevard de Montmorency, F-75781 Paris Cédex 16(FR)**

(72) Inventeur: **Le Balc'H, Maurice Yves Marie, 13 Hameau des Vignes, F-95670 Marly la Ville(FR)**

(74) Mandataire: **Bérogin, Francis et al, c/o CABINET HARLE & PHELIP 21 rue de la Rochefoucauld, F-75009 Paris(FR)**

ACTORUM AG

# Description

La présente invention concerne les pales en matériaux composites, destinées en particulier à l'équipement des rotors des aérodynes à voilure au moins partiellement tournante, tels que les hélicoptères.

L'invention a plus précisément pour objet une telle pale à noyau structural et à revêtement d'habillage profilé, ainsi qu'un procédé de fabrication d'une telle pale.

On sait que les pales en matériaux composites pour rotors de giravions actuellement réalisées comportent généralement au moins un longeron, en général constitué de stratifils de fibres à haute résistance mécanique agglomérés par une résine synthétique polymérisée et permettant la reprise des efforts centrifuges et d'une partie des moments de flexion qui s'exercent sur la pale en rotation, une coque externe rigide et profilée au profil définitif de la pale correspondante et qui est un revêtement travaillant en général constitué de plusieurs couches superposées, et de préférence croisées, de tissus de fibres à haute résistance mécanique rigidifiées par une résine synthétique polymérisée, revêtement contribuant avec le longeron à encaisser les moments de flexion et de plus transmettant les couples de torsion s'exerçant sur la pale, et au moins un élément de remplissage en un matériau synthétique léger, tel qu'un matériau cellulaire ou en mousse, ou encore un matériau en nid d'abeille, qui est disposé dans la coque externe travaillante afin de combler au moins partiellement le volume interne de cette dernière et complémentaire de celui du ou des longerons, qui traversent également dans le sens longitudinal cette coque externe travaillante.

Dans une pale ayant cette structure classique, le longeron, le ou les éléments de remplissage et la coque externe travaillante et profilée sont les éléments essentiels qui participent à la résistance structurale de la pale, et qui supportent donc les différents efforts et moments de flexion et torsion auxquels la pale est soumise du fait des sollicitations statiques, dynamiques et aérodynamiques qui s'exercent sur elle, lorsque le rotor du giravion est en fonctionnement.

La réalisation de telles pales présente un certain nombre de difficultés, du fait notamment que la coque externe doit, en plus de son aptitude à la résistance structurale, présenter simultanément le profil aérodynamique précis souhaité et également de bonnes qualités d'état de surface, de tenue à l'érosion et de résistance aux impacts.

La résistance aux impacts et la tenue à l'érosion supposent respectivement un surdimensionnement des éléments structuraux et la présence sur la coque externe d'au moins une couche de protection supplémentaire, ce qui est générateur d'une pénalisation en masse. L'obtention du profil aérodynamique précis souhaité et de bonnes qualités d'état de surface implique, pour la fabrication, l'utilisation d'outillages de précision, notamment de moules à très faible tolérance, et l'exécution de travaux de finition longs et délicats, notamment de calfatages, mastiquages, ponçages et peintures. Il en résulte un surcoût de fabrication important.

De plus, en cas d'endommagement du revêtement, comme celui-ci est structural, il est impossible de procéder sur place, chez l'utilisateur, à des réparations simplifiées, et il est nécessaire de déposer la pale et de la renvoyer en usine, pour restaurer puis contrôler l'intégrité structurale de la pale, ou la remplacer en cas d'endommagement majeur. Il est donc impossible de réparer le profil sans réparer toute la pale.

Enfin, il est impossible de modifier le profil sans changer complètement la pale, en cas, par exemple, d'évolution nécessaire du rotor suite à une revalorisation de l'aérodyne.

Par ailleurs, dans le domaine des pales de rotor d'hélicoptère comprenant un panneau de bord de fuite qui est, d'une part, constitué d'une âme en nid d'abeille sur laquelle sont collées une peau d'extrados et une peau d'intrados et, d'autre part, fermé à son extrémité radiale interne (tournée vers le pied de pale ou vers le moyeu) par un bouchon en élastomère, il a été proposé par le brevet des Etats-Unis d'Amérique 4335174 de coller une bande adhésive imprégnée d'une résine thermodurcissable sur les peaux et sur la tranche de l'âme en nid d'abeille, d'appliquer ensuite une mousse adhésive sur la portion de bande adhésive recouvrant la tranche de l'âme, de placer le bouchon d'élastomère par dessus la mousse et la bande adhésive, et enfin de polymériser l'ensemble par un traitement thermique pour que le gonflement de la mousse repousse la bande adhésive contre le profil irrégulier de la tranche de l'âme en nid d'abeille, et que la couche de mousse forme un contour régulier sur l'âme. Eventuellement, et préalablement à la rigidification, une seconde bande adhésive également imprégnée est collée par dessus la mousse et les bords adjacents de la première bande, puis, après mise en place du bouchon d'élastomère, une troisième bande adhésive est collée par dessus la première bande et les bords de l'élastomère qui recouvrent cette première bande. Mais ces moyens permettent uniquement l'obtention d'un joint parfaitement étanche entre le bouchon en élastomère et le panneau de bord de fuite, grâce à la mousse et la ou les bandes adhésives rigidifiées.

Par l'invention, on se propose de remédier aux inconvénients mentionnés ci-dessus et présentés par les pales en matériaux composites de l'état de la technique, et l'invention a pour but de proposer une pale de fabrication économique, dont les éléments structuraux peuvent être réalisés de façon optimale avec une tolérance de précision relativement grande et sans finition.

Un autre but de l'invention est de proposer une pale présentant une meilleure tenue aux impacts de tout genre et à l'érosion, et qui peut être facilement réparée par l'utilisateur en cas d'endommagement mineur du revêtement externe.

Un autre but également de l'invention est de proposer une pale dont le profil puisse être facilement et rapidement modifié et adapté, pour obtenir une évolution différente du profil selon l'envergure comme selon la corde de la pale.

L'idée à la base de l'invention est de produire des pales en matériaux composites d'une structure originale par la mise en oeuvre d'une nouvelle technique de réalisation consistant à assembler, de façon classique, tous les éléments néecessaires ayant pour fonction d'assurer la résistance structurale de la pale, ou à créer un noyau structural remplissant cette fonction et à entourer ces éléments structuraux assemblés ou ce noyau structural d'un revêtement d'habillage profilé, qui est un revêtement de protection non-vital pour la pale, interchangeable et réparable ou consommable, selon que ce revêtement d'habillage a été légèrement ou sévèrement endommagé.

A cet effet, l'invention a pour objet une pale en matériaux composites, en particulier pour rotor d'aérodyne à voilure au moins partiellement tournante, qui se caractérise en ce qu'elle comporte:
- un noyau structural, de préférence de profil aérodynamique approximatif, assurant la résistance structurale de la pale, et
- un revêtement d'habillage entourant le noyau structural, et comprenant lui-même
- une coque externe rigide et mince, au profil aérodynamique souhaîté, et
- une couche d'un matériau de conformation non-travaillant, léger et souple assurant le remplissage entre le noyau structural et la coque externe.

On obtient ainsi une pale dont le noyau structural, réalisé sans grande précision de forme et sans finition de surface, peut être associé à plusieurs revêtements d'habillage différents, dont chacun comporte une coque externe présentant un ou plusieurs profils aérodynamiques, de préférence d'une même famille, de courbures différentes selon l'envergure et/ou selon la corde de la pale. Simultanément, chaque revêtement d'habillage fait également fonction de bouclier de protection, dont la coque profilée peut être réalisée en un matériau choisi pour ses qualités de tenue à l'érosion et de résistance aux impacts, tandis que sa couche de conformation et de remplissage assure l'adaptation à la forme du noyau et la compensation ou l'"absorption" des différences de profils entre le noyau structural et la coque externe.

En cas d'endommagement mineur du revêtement d'habillage, ce dernier peut être de plus facilement et localement réparé, au moyen de pièces des matériaux constitutifs de la coque et de la couche de conformation et remplissage, tandis qu'à la suite d'un endommagement majeur, avec éventuellement arrachement partiel du revêtement d'habillage, le caractère non-vital de ce revêtement ne s'oppose pas au retour de l'aérodyne à sa base, où la pale endommagée peut être déposée et son revêtement d'habillage réparé, s'il s'agit d'un endommagement limité. Si l'endommagement est plus étendu, la pale sera renvoyée en usine, où après avoir retiré complètement l'habillage, on s'assurera de l'intégrité structurale du noyau, et, le cas échéant, on la rétablira, puis un nouveau revêtement d'habillage, identique ou non à celui d'origine pourra être mis en place autour du noyau structural pour obtenir une pale réutilisable.

Il est clair que le noyau structural d'une pale selon l'invention peut être toute structure primaire incluant tous les éléments structuraux de toute pale en matériaux composites de réalisation connue à ce jour. En particulier, lorsque la pale est du type comportant:
- au moins un longeron en stratifils de fibres à haute résistance mécanique agglomérés par une résine synthétique polymérisée,
- une coque rigide travaillante, participant à la résistance structurale de la pale, et comprenant au moins une couche de tissu de fibres à haute résistance mécanique agglomérées par une résine synthétique polymérisée, et
- au moins un élément de remplissage en un matériau synthétique léger, disposé dans la coque travaillante, elle se caractérise selon l'invention en ce que la coque travaillante, le ou les longerons et le ou les éléments de remplissage sont assemblés afin de constituer le noyau structural de la pale.

Avantageusement, le revêtement d'habillage est un revêtement non-travaillant à coque externe en résine thermoplastique, ne participant pas à la résistance structurale de la pale, et permettant de plus, par rapport aux revêtements traditionnels des pales en matériaux composites, d'obtenir un excellent état de surface et une tenue à l'érosion améliorée.

Si, de plus, la résine thermoplastique de la coque externe est teintée dans la masse, on fait l'économie, au cours de la fabrication des opérations de peinture et de mastiquage.

En outre, afin de procurer à la coque de meilleures propriétés de résistance aux impacts et à l'érosion, il peut être préférable de renforcer la coque thermoplastique au moyen de fibres minérales ou organiques, et éventuellement, cette coque peut comprendre une couche anti-érosion de tissu de fibres minérales ou organiques agglomérées par une résine synthétique polymérisée.

Pour obtenir de bonnes propriétés de légèreté et de souplesse de la couche de conformation et de remplissage, cette dernière est avantageusement réalisée en un matériau synthétique cellulaire ou en mousse souple.

Afin de faciliter la mise en place d'un revêtement d'habillage autour d'un noyau structural, il est de plus avantageux que ce revêtement d'habillage soit constitué de deux parties stratifiées complémentaires, rapportées autour du noyau structural et collées l'une sur l'autre et, de préférence également, sur le noyau structural. De préférence, pour simplifier la réalisation de deux demi-revêtements complémentaires et présentant des demi-profils évolutifs permettant différentes combinaisons pour former différents profils autour d'un même noyau structural, les deux parties stratifiées complémentaires de chaque revêtement d'habillage sont avantageusement et respectivement une partie d'extrados et une partie d'intrados, qui comprennent chacune respectivement les parties d'extrados ou d'intrados de la coque externe et de la couche de matériau de conformation et de remplissage, et qui sont collées l'une à l'autre aux niveaux des bords d'attaque et de fuite de la pale.

Afin de renforcer le caractère non-vital du revêtement d'habillage, il est souhaîtable que le noyau

structural présente une section transversale, selon la corde de la pale, ayant un contour sensiblement parallèle au profil de la coque externe du revêtement d'habillage, dont la couche de matériau de conformation et de remplissage est alors de préférence une feuille de compensation des écarts de tolérance entre ledit contour et ledit profil.

Mais il est également possible, pour simplifier la réalisation du noyau structural, que ce dernier présente une section transversale, selon la corde de la pale, ayant un contour à facettes basé sur des formes géométriques simples, telles que triangulaires et quadrangulaires, auquel cas, la couche du matériau de conformation et de remplissage du revêtement d'habillage sera, de préférence, un matelas plus épais de compensation des différences de forme entre ledit contour et le profil de la coque externe du revêtement d'habillage.

Selon un exemple de réalisation particulier, le noyau structural comprend également un longeron central composite, dont les extrémités transversales sont solidarisées, chacune par l'intermédiaire d'une semelle composite, l'une contre l'intérieur de la partie d'extrados et l'autre contre l'intérieur de la partie d'intrados d'une coque rigide travaillante du noyau structural, le longeron central s'étendant selon l'envergure de la pale, sensiblement au milieu de la corde de cette dernière, et délimitant avec la coque rigide travaillante et avec un longeron de bord d'attaque du noyau structural, un caisson de bord d'attaque rempli d'un élément de remplissage avant du noyau structural. Dans cet exemple, ce dernier est essentiellement constitué par le caisson de bord d'attaque ainsi constitué. Mais, selon un exemple préféré de réalisation, le noyau structural comprend de plus un élément de remplissage arrière, disposé dans la coque rigide travaillante en arrière du longeron central dudit noyau. Dans cet exemple comme dans le précédent, chaque élément de remplissage du noyau structural peut être réalisé en un matériau synthétique cellulaire ou en mousse, ou encore en nid d'abeille stratifié.

L'invention a également pour objet un procédé de rabrication d'une pale selon l'invention, et telle que définie ci-dessus, et ce procédé se caractérise en ce qu'il consiste:

- à réaliser un noyau structural sous la forme d'une structure primaire incluant tous les éléments structuraux de la pale, et
- à entourer ledit noyau structural d'un revêtement d'habillage à l'aide d'une couche d'un matériau de conformation, non-travaillant, léger et souple, et d'une coque externe rigide et mince, qui est profilée au profil aérodynamique définitif de la pale.

Dans une variante préférée de mise en oeuvre simplifiée de ce procédé, ce dernier consiste à entourer ledit noyau structural avec ledit revêtement d'habillage en rapportant, autour dudit noyau structural, deux parties stratifiées complémentaires formant le revêtement et dont chacune comprend une partie de la couche de matériau de conformation et une partie de la coque externe profilée, les deux parties stratifiées et complémentaires étant collées l'une sur l'autre et, de préférence également, sur le noyau structural.

A titre d'exemple, chacune des deux parties stratifiées et complémentaires est réalisée par calandrage ou thermoformage de la partie correspondante de la coque externe profilée en résine thermoplastique, et par collage d'une partie de la couche de matériau de conformation sur la face interne de ladite partie correspondante de la coque externe.

L'invention sera mieux comprise, et d'autres caractéristiques et avantages de l'invention ressortiront à la lecture de la description donnée ci-dessous à titre non limitatif, en référence aux dessins annexés dans lesquels:

Fig. 1 est une vue en coupe transversale, selon la corde, d'un premier exemple de pale de rotor d'hélicoptère,

Fig. 2 est une vue en perspective et avec arrachement partiel, d'un tronçon de la partie courante de la pale dont la coupe est représentée sur la figure 1,

Fig. 3 est une vue en coupe transversale analogue à la figure 1 et représentant schématiquement un second exemple de pale, et

Fig. 4 est une vue schématique, en coupe transversale et éclatée, illustrant le procédé de fabrication et la structure d'un troisième exemple de pale.

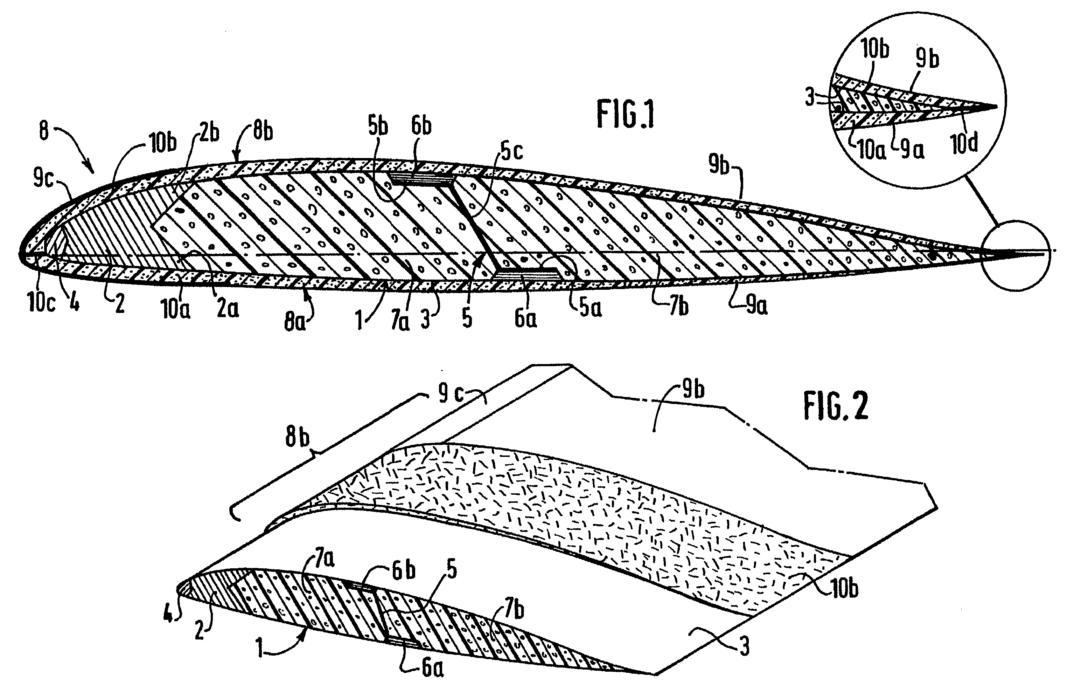

La pale représentée sur les figures 1 et 2 comprend un noyau structural 1, réalisé sous la forme d'une structure primaire comportant tous les éléments structuraux et essentiels d'une pale d'hélicoptère d'une structure déjà connue, et la réalisation de ce noyau structural 1 est très proche de la réalisation de cette pale connue.

Ce noyau 1 comprend un longeron de bord d'attaque 2, constitué de stratifils unidirectionnels de fibres minérales ou organiques à haute résistance mécanique, par exemple de fibres de verre ou de fibres aramides telles que celles commercialisées sous le nom de marque de KEVLAR, et ces stratifils sont agglomérés par une résine synthétique d'imprégnation thermodurcissable et polymérisée.

Ce longeron 2 présente une section transversale sensiblement en forme de C, du fait de la courbure convexe de ses faces d'intrados et d'extrados ainsi que de l'évidement concave de sa face arrière, qui délimite ainsi sensiblement une aile arrière d'intrados 2a et une aile arrière d'extrados 2b. De plus, ce longeron présente également sur sa face avant un petit évidement concave dont la fonction est précisée ci-dessous.

Le longeron 2 ainsi constitué comprend, de manière connue, un pied ou une partie d'emplanture par lequel il est destiné à être raccordé à un moyeu de rotor, et ce longeron 2 est destiné à encaisser essentiellement les efforts centrifuges auxquels la pale est soumise en service.

Le noyau structural 1 comprend également une coque rigide travaillante 3 ayant un profil transversal qui est sans grande précision de forme, sensiblement parallèle au profil aérodynamique définitif souhaîté pour la pale. Cette coque travaillante 3 est réalisée sans finition de son état de surface,c'est-à-dire sans calfatage, mastiquage, ponçage, ni peinture, par empilage de plusieurs couches de tissu de fibres minérales ou organiques à haute résistance mécanique agglomérées par une résine synthétique polymérisée. Par exemple, la coque travaillante 3 est constituée de deux couches croisées de tissu de fibres de carbone dont les fils de chaîne et de trame sont inclinés sensiblement à 45° sur la direction du bord d'attaque de la pale, ces deux couches étant préimprégnées d'une résine par exemple de type époxyde, polymérisée à chaud. Le longeron 2 est disposé dans la zone du bord d'attaque de la coque 3, à laquelle il est rigidement adhérisé par la polymérisation des résines, le long de ses faces convexes d'extrados et d'intrados et de ses ailes arrières 2a et 2b, et de sorte que l'évidement concave de sa face avant délimite avec la coque 3 un logement occupé par un contrepoids 4.

L'ossature résistante de la pale comprend également un longeron central 5. Ce longeron 5, en composite, qui s'étend sensiblement sur toute l'envergure de la pale au niveau du milieu de sa corde, présente une section transversale sensiblement en forme de Z avec une portion centrale formant l'âme 5c constituée d'un panneau de nid d'abeille revêtu de chaque côté de couches de tissu de fibres de carbone préimprégnées d'une résine thermodurcissable, et deux ailes 5a et 5b, constituées chacune par la superposition des prolongements des couches de tissu de carbone imprégnées des faces de la portion centrale 5c. L'aile d'intrados 5a repose contre la face supérieure d'une semelle d'intrados 6a en composite, formée de fibres disposées longitudinalement, elle-même appliquée par sa face inférieure contre la face interne de la partie d'intrados de la coque 3, et, de manière analogue, l'aile d'extrados 5b repose contre la face inférieure d'une semelle d'extrados 6b en composite, formée également de fibres disposées longitudinalement, qui est appliquée par sa face supérieure contre la face interne de la partie d'extrados de la coque 3, mais dans une position plus proche du longeron 2 que l'aile et la semelle d'intrados 5a et 6a. La polymérisation simultanée de la résine thermodurcissable d'imprégnation des différentes parties du longeron central 5, et de ses deux semelles 6a et 6b ainsi que des couches de tissu de la coque 3 assure une liaison rigide du longeron central 5 par l'intermédiaire de ses deux semelles 6a et 6b directement aux parties d'intrados et d'extrados de la coque rigide et travaillante 3. De la sorte, le longeron central 5 délimite avec la coque travaillante 3 et le longeron 2 un caisson structural avant ou de bord d'attaque, qui est de préférence rempli d'un corps de remplissage avant 7a, tandis que ce même longeron central 5 délimite avec la seule coque travaillante 3, dans la partie tournée vers le bord de fuite de cette dernière, un caisson structural arrière ou de bord de fuite qui est également de préférence rempli d'un corps de remplissage arrière 7b. Les corps de remplissage 7a et 7b sont chacun constitués en un matériau synthétique léger, cellulaire ou en mousse, par exemple de polyuréthane, ou encore en nid d'abeille synthétique et stratifié, afin de présenter les formes voulues.

La réalisation de ce noyau structural 1 se rapproche donc de la réalisation classique d'une pale connue, à l'exception de l'absence de finition de l'état de surface de la coque travaillante 3, et surtout de la forme de cette dernière qui n'est que sensiblement parallèle au profil aérodynamique définitif voulu, et réalisée sans grande précision, avec une tolérance sur le profil approximatif ainsi obtenu qui peut être relativement grande, mais qui est toujours compensée par le montage autour de ce noyau structural 1 d'un revêtement d'habillage 8 décrit ci-dessous. Il est clair que la réalisation du noyau structural s'en trouve d'autant facilitée.

Le revêtement d'habillage 8 est un revêtement non travaillant, composite et stratifié, à deux couches superposées dont aucune ne participe à la résistance structurale de la pale. Ce revêtement 8 est constitué par l'assemblage autou du noyau structural 1 d'un demi-revêtement d'habillage d'intrados 8a et d'un remi-revêtement d'habillage d'extrados 8b qui sont complémentaires. Chacun de ces deux demi-revêtements 8a et 8b comprend une couche externe rigide et mince, en résine thermoplastique qui peut être teintée dans la masse, qui est thermoformée au profil exact désiré, pour constituer la partie respectivement d'intrados 9a ou d'extrados 9b d'une coque externe (9a-9b) rigide, mince, non-travaillante, mais supportant seulement les efforts aérodynamiques, et profilée avec précision selon le profil aérodynamique exact souhaité.

Chaque demi-revêtement 8a ou 8b comprend également une couche interne, réalisée en une mousse synthétique légère, souple et déformable, pour former respectivement une couche de conformation d'intrados 10a et une couche de conformation d'extrados 10b, destinées à remplir l'intervalle entre la coque externe profilée et non-travaillante (9a-9b) et la coque interne travaillante 3, en compensant ou en absorbant les différences de forme entre le contour de la coque interne 3 et le profil précis de la coque externe (9a-9b).

La couche de remplissage et de conformation (10a-10b) du revêtement d'habillage 8 assure ainsi l'adaptation de la coque profilée non travaillante (9a-9b) autour du noyau structural 1. Dans la zone du bord d'attaque, chaque demi-coque externe 9a ou 9b présente une portion 9c légèrement surépaissie vers l'intérieur, et l'épaisseur de la feuille de mousse conformable 10a et 10b est supérieure à son épaisseur au voisinage du bord de fuite. L'épaisseur moyenne de la couche de mousse déformable est environ de 5 mm, tandis que l'épaisseur moyenne de la coque externe profilée est d'environ 1 mm.

Pour faciliter le montage du revêtement d'habillage 8 autour du noyau structural 1, chaque feuille de mousse 10a ou 10b est collée contre la face interne concave de la demi-coque correspondante 9a ou 9b, afin d'obtenir les deux demi-revêtements 8a et 8b, qui sont ensuite rapportés autour du noyau structural 1 et collés chacun sur la surface d'intrados ou d'extrados en regard et correspondante de ce dernier, et l'un contre l'autre aux niveaux des plans de joint du bord d'attaque 10c et du bord de fuite 10d.

L'utilisation d'une résine thermoplastique teintée dans la masse pour constituer la coque externe et profilée (9a, 9b) permet de bénéficier des qualités et caractéristiques propres à ce matériau, qui donnent un état de surface parfait, d'où l'économie des étapes de finition longues et délicates de retouche, telles que les étapes de ponçage, mastiquage, ainsi que de peinture, et une tenue à l'érosion améliorée par rapport aux peintures usuelles. De plus, la coque externe (9a-9b) et la couche de conformation et remplissage (10a-10b) en mousse, associées pour constituer le revêtement d'habillage 8, forment simultanément un bouclier de protection de tous les éléments structuraux regroupés dans le noyau 1 de la pale, vis-à-vis des chocs de moyenne importance qui sont les plus nombreux et dus, par exemple, aux projections de pierres, cailloux, et heurts avec les branchages. En cas d'endommagement local du revêtement d'habillage 8, comme ce dernier n'est pas structural, il est possible de procéder chez l'utilisateur même à des réparations simplifiées, à l'aide de pièces des mêmes matériaux constitutifs. En cas d'endommagement plus conséquent, la pale est déposée et renvoyée en usine, où le revêtement d'habillage 8 est démonté pour permettre un contrôle de l'intégrité du noyau structural 1, et le cas échéant, une réparation réalisée pour restaurer cette intégrité. De plus le revê-tement d'habillage 8 est éventuellement réparé, plus ou moins localement, ou tout simplement remplacé par un autre revêtement identique, si le revêtement d'origine est trop endommagé et inutilisable, afin d'obtenir une pale réutilisable. Il faut noter que le caractère non-vital du revêtement d'habillage 8 permet, lorsqu'il a été partiellement arraché en vol, de profiter des caractéristiques aérodynamiques certes dégradées, mais cependant suffisantes, du profil approximatif du noyau structural 1 pour autoriser le retour de l'aérodyne à sa base.

Pour améliorer la résistance aux impacts et à l'érosion, il est possible de renforcer la résine de la coque externe profilée 9a-9b par un apport limité de fibres minérales ou organiques, ou même de superposer sur cette coque 9a-9b une couche de tissu de fibres agglomérées par une résine synthétique d'imprégnation polymérisée et faisant ainsi office de couche anti-érosion.

Pour l'assemblage par collage des deux demi-revêtements 8a, 8b sur le noyau structural 1, il est à noter que l'on peut avantageusement utiliser le même moule au profil aérodynamique final souhaité et d'une manière générale le même outillage, qui a été utilisé pour réaliser les deux demi-revêtements 8a, 8b et en particulier les deux demi-coques rigides 9a, 9b de ces derniers.

On obtient ainsi une pale dont le revêtement d'habillage non-travaillant 8 n'est pas vital mais est consommable et interchangeable, et est facilement réparable, ce qui permet de faire évoluer le profil de la pale, selon l'envergure comme selon la corde, de façon modulaire par l'association de demi-revêtements d'intrados 8a et d'extrados 8b ayant la ou les courbures souhaitées. Cette nouvelle structure de pale permet de changer le profil d'une pale, ou de l'adapter ou le transformer, à condition cependant de rester dans les profils de même génération, à partir d'un même noyau structural 1 de base. Cet avantage est important lorsqu'on veut comparer différentes solutions aérodynamiques et, au niveau de la production, pour réaliser plusieurs types de pale ayant une structure résistante commune, afin d'équiper une gamme de plusieurs aérodynes différents mais assez voisins, ainsi que pour revaloriser un aérodyne lorsqu'une évolution d'un rotor l'impose.

Il est également à noter que la pénalisation en masse due à la présence du revêtement d'habillage peut être compensée par l'optimisation des éléments constitutifs du noyau structural 1. En effet, comme ce dernier est protégé par le revêtement d'habillage 8, ses éléments constitutifs peuvent chacun être réalisés aux épaisseurs minimales ou optimisés en caractéristiques, sans souci des diverses agressions et impacts auxquels la pale peut être soumise en utilisation. Le noyau structural 1 ne peut être contrôlé qu'avant son enrobage par le revêtement d'habillage 8. Après mise en place et collage de ce dernier, le contrôle final de la pale consiste en une vérification extérieure.

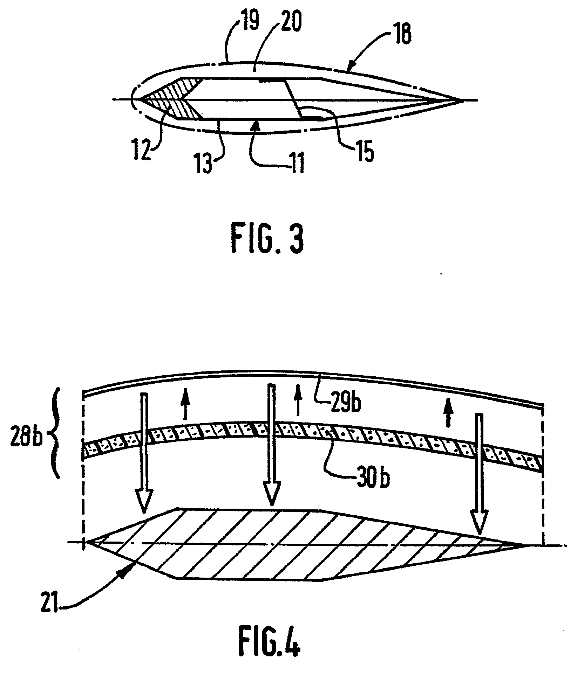

Sur la figure 3, on a schématiquement représenté, en coupe transversale, un second exemple de pale en matériaux composites un noyau structural 11, indiqué en trait plein, réunissant tous les éléments travaillants de la pale, et entouré d'un revêtement d'habillage 18, indiqué en traits mixtes, qui est un revêtement rapporté non vital, et non travaillant, constitué d'une coque externe 19 mince, rigide et profilée au profil aérodynamique précis souhaîté, en une résine thermoplastique, et d'une couche d'une mousse 20 de conformation et de remplissage qui est choisie pour ses caractéristiques propres de légèreté et de souplesse.

Comme dans l'exemple précédent, le noyau structural 11 est constitué par l'assemblage, de manière traditionnelle, d'un longeron de bord d'attaque 12, d'une coque rigide travaillante 13 et d'un longeron central en Z 15, raccordé à la coque 13 avec éventuellement interposition de semelles, et, éventuellement, remplissage des caissons de bord d'attaque et de bord de fuite ainsi formés par des corps de remplissage, en mousse rigide et légère ou en nid d'abeille stratifié.

Mais, à la différence du premier exemple des figures 1 et 2, le contour de la section transversale du noyau structural 11 composite n'est pas sensiblement parallèle au profil aérodynamique précis de la coque externe 19 en composite. Au contraire, il s'en différencie très nettement dans la mesure où le noyau structurel 11 présente un contour à facettes, et plus précisément un contour en hexagone aplati, en raison de la section triangulaire des parties avant du longeron 12 et de la coque travaillante 13, ainsi que de la section également triangulaire de la partie arrière de cette coque 13, en arrière de l'âme centrale 15 et jusqu'au bord de fuite, alors que la partie centrale du noyau 11, sensiblement entre le longeron avant 12 et le longeron central 15, présente une section rectangulaire. Cependant, ce contour à base de formes géométriques simples délimite un profil qui, bien que très approximatif par rapport à celui présenté par la coque externe 19, reste suffisamment efficace sur le plan aérodynamique pour conserver le caractère non vital au revêtement d'habillage 18 et permettre la sauvegarde de l'aérodyne lorsque ce revêtement 18 vient à être arraché du noyau structural de base 11. Mais dans ce cas, afin de compenser les différences plus importantes entre les fornes du contour du noyau 11 et du profil de la coque 19, il est nécessaire que la couche de mousse 20 soit un matelas relativement épais permettant de compenser ces différences importantes de forme. La réalisation d'une telle pale permet une économie de fabrication, en raison des formes simples du noyau structural, encore plus grande que celle obtenue par la fabrication de la pale des figures 1 et 2, par rapport aux pales traditionnelles.

Sur la figure 4, on a schématiquement illustré certaines étapes du procédé de fabrication, consistant, après la réalisation par tout moyen connu d'un noyau structural 21, de section transversale également en forme d'hexagone irrégulier et aplati, à recouvrir la surface d'extrados de ce noyau structural d'un revêtement d'habillage d'extrados 28b, qui comprend un matelas de mousse souple et déformable 30b et une demi-coque d'extrados rigide et profilée 29b. Les deux faces du matelas de mousse 30b sont recouvertes d'un film de colle, et ce matelas 30b est tout d'abord collé contre la face interne concave de la demi-coque d'extrados 29b, puis le demi-revêtement 28b ainsi obtenu est collé sur la surface d'extrados du noyau 21. On procède de même pour le revêtement de la surface d'intrados de ce noyau 21, à l'aide d'un demi-revêtement d'intrados comportant également une demi-coque d'intrados rigide et profilée et un matelas de mousse, et les deux demi-revêtements sont également collés l'un à l'autre aux niveaux du bord d'attaque et du bord de fuite de la pale ainsi constituée.

En ce qui concerne la fabrication des demi-coques telles que 29b, elle peut être réalisée par thermoformage d'un film de résine thermoplastique ou encore par calandrage d'une feuille de résine thermoplastique.

## Revendications

1. Pale en matériaux composites, en particulier pour rotor d'aérodyne à voilure au moins partiellement tournante, caractérisée en ce qu'elle comporte:

- un noyau structural (1), de préférence de profil aérodynamique approximatif, assurant la résistance structurale de la pale, et
- un revêtement d'habillage (8), entourant le noyau structural (1), et comprenant:
    - une coque externe (9a, 9b), rigide et mince, au profil aérodynamique souhaîté, et
    - un couche (10a, 10b) d'un matériau de conformation non-travaillant, léger et souple, assurant le remplissage entre le noyau structural (1) et la coque externe (9a,9b).

2. Pale selon la revendication 1, du type comportant:
- au moins un longeron (2) en stratifils de fibres à haute résistance mécanique agglomérés par une résine synthétique polymérisée,
- une coque rigide (3) travaillante, participant à la résistance structural de la pale, et comprenant au moins une couche de tissu de fibres à haute résistance mécanique agglomérées par une résine synthétique polymérisée, et
- au moins un élément de remplissage (7a, 7b) en un matériau synthétique léger disposé dans la coque travaillante (3),
caractérisée en ce que ladite coque travaillante (3), le ou les longerons (2) et le ou les éléments de remplissage (7a, 7b) sont assemblés afin de constituer ledit noyau structural (1).

3. Pale selon l'une des revendications 1 et 2, caractérisée en ce que le revêtement d'habillage (8) est un revêtement non travaillant à coque externe (9a, 9b) en résine thermoplastique ne participant pas à la résistance structurale de la pale.

4. Pale selon la revendication 3, caractérisé en ce que la résine thermoplastique de la coque externe (9a-9b) est teintée dans la masse.

5. Pale selon l'une des revendications 3 et 4, caractérisée en ce que la résine thermoplastique de la coque externe (9a, 9b) est armée de fibres minérales ou organiques.

6. Pale selon l'une des revendications 1 à 5, caractérisée en ce que la coque externe (9a, 9b) comprend au moins une couche anti-érosion en tissu de fibres minérales ou organiques agglomérées par une résine synthétique polymérisée.

7. Pale selon l'une des revendications 1 à 6, caractérisée en ce que ladite couche de matériau de conformation et de remplissage (10a-10b) est en matériau cellulaire ou en mousse souple.

8. Pale selon l'une des revendications 1 à 7, caractérisée en ce que ledit revêtement d'habillage (8) est constitué de deux parties stratifiées et complémentaires (8a-8b), rapportées autour du noyau structural (1), et collées l'une sur l'autre et de préférence également sur le noyau structural (1).

9. Pale selon la revendication 8, caractérisée en ce que les deux parties stratifiées et complémentaires (8a, 8b) du revêtement d'habillage (8) sont une partie d'extrados (8b) et une partie d'intrados (8a) qui comprennent chacune respectivement les parties d'extrados (9b, 10b) ou d'intrados (9a, 10a) de la coque externe et de la couche de matériau de conformation et remplissage, et qui sont collées l'une à l'autre au niveau des bords d'attaque (10c) et de fuite (10d) de la pale.

10. Pale selon l'une des revendications 1 à 9, caractérisée en ce que le noyau structural (1) présente une section transversale, selon la corde de la pale, ayant un contour sensiblement parallèle au profil de la coque externe (9a, 9b) du revêtement d'habillage (8), dont la couche de matériau de conformation et de remplissage (10a-10b) est de préférence une feuille de compensation des écarts de tolérance entre ledit contour et ledit profil.

11. Pale selon l'une des revendications 1 à 9, caractérisée en ce que le noyau structural (11) présente une section transversale, selon la corde de la pale, ayant un contour à facettes basé sur des formes géométriques simples, telles que triangulaires et quadrangulaires, la couche (20) de matériau de conformation et de remplissage du revêtement d'habillage (18) étant, de préférence, un matelas de compensation des différences de formes entre ledit contour et le profil de la coque externe (19) dudit revêtement (18).

12. Pale selon l'une des revendications 1 à 11, caractérisée en ce que ledit noyau structural (1) comprend un longeron central composite (5), dont les extrémités transversales (5a, 5b) sont solidarisées, chacune par l'intermédiaire d'une semelle composite (6a, 6b), l'une (5b) contre l'intérieur de la partie d'extrados et l'autre (5a) contre l'intérieur de la partie d'intrados d'une coque rigide travaillante (3) dudit noyau structural (1), ledit longeron central (5) s'étendant selon l'envergure de la pale, sensiblement au milieu de la corde de cette dernière, et délimitant avec ladite coque rigide travaillante (3) et un longeron (2) de bord d'attaque du noyau structural (1) un caisson de bord d'attaque rempli d'un élément (7a) de remplissage avant dudit noyau.

13. Pale selon la revendication 12, caractérisée en ce que le noyau structural (1) comprend également un élément de remplissage arrière (7b), disposé dans ladite coque rigide travaillante (3), en arrière dudit longeron central (5) dudit noyau (1).

14. Pale selon l'une des revendications 1 à 13, caractérisée en ce que chaque élément de remplissage (7a, 7b) dudit noyau structural (1) est en un matériau cellulaire ou en mousse, ou en nid d'abeille stratifié.

15. Procédé de fabrication d'une pale selon l'une des revendications 1 à 14, caractérisé en ce qu'il consiste:
- à réaliser un noyau structural (1) sous la forme d'une structure primaire incluant tous les éléments structuraux de la pale, et
- à entourer ledit noyau structural (1) d'un revêtement d'habillage (8), à l'aide d'une couche (10a-10b) d'un matériau de conformation non travaillant, léger et souple, et d'une coque externe (9a-9b) rigide et mince qui est profilée au profil aérodynamique définitif de la pale.

16. Procédé selon la revendication 15, caractérisé en ce qu'il consiste à entourer ledit noyau structural (1) avec ledit revêtement d'habillage (8) en rapportant, autour dudit noyau structural (1) deux parties stratifiées complémentaires (8a,8b) formant ledit revêtement et dont chacune comprend une partie (10a,10b) de ladite couche de matériau de conformation et une partie (9a,9b) de ladite coque externe profilée, les deux parties stratifiées et complémentaires (8a,8b) étant collées l'une contre l'autre et de préférence également sur le noyau structural (1).

17. Procédé selon la revendication 16, caractérisé en ce que chacune des deux parties stratifiées complémentaires (8a,8b) est réalisée par calandrage ou thermoformage de la partie correspondante (9a,9b) de la coque externe profilée en résine thermoplastique, et par collage d'une partie (10a,10b) de la couche de matériau de conformation sur la face interne de ladite partie correspondante (9a,9b) de la coque externe.

## Patentansprüche

1. Blatt aus Verbundmaterial, insbesondere für den Rotor eines mit mindestens teilweise rotierenden Tragflügeln ausgestatteten Luftfahrzeugs, gekennzeichnet durch:
- einen Strukturkern (1), vorzugsweise von annähernd aerodynamischem Profil, zur Sicherstellung der strukturellen Festigkeit des Blattes und
- eine Ummantelung (8), die den Strukturkern (1) umgibt und
	— eine starre und dünne äußere Schale (9a, 9b) mit einem gewünschten aerodynamischen Profil und
	— eine leichte und flexible Schicht (10a, 10b) aus einem nicht arbeitenden Formgebungsmaterial für die Ausfütterung zwischen dem Strukturkern (1) und der äußeren Schale (9a, 9b) umfaßt.

2. Blatt nach Anspruch 1, umfassend:
- mindestens einen Holm (2) aus Rovings aus Fasern hoher mechanischer Festigkeit, die durch ein polymerisiertes Kunstharz zusammengeballt sind,
- eine arbeitende, starre Schale (3), die an der strukturellen Festigkeit des Blattes teilnimmt und mindestens eine Schicht aus einem Faserstoff aus Fasern hoher mechanischer Festigkeit, die mit einem polymerisierten Kunstharz zusammengeballt sind, und
- mindestens ein Ausfütterungselement (7a, 7b) aus einem leichten synthetischen Material, das in der arbeitenden Schale (3) angeordnet ist, dadurch gekennzeichnet, daß die arbeitende Schale (3), der bzw die Holme (2) und das bzw. die Ausfütterungselemente (7a, 7b) miteinander vereint sind, um den Strukturkern (1) zu bilden.

3. Blatt nach einem der Ansprüche 1 und 2, dadurch gekennzeichnet, daß die Ummantelung (8) eine nicht arbeitende Ummantelung mit einer äußeren Schale (9a, 9b) aus thermoplastischem Kunststoff ist, die an der strukturellen Festigkeit des Blattes nicht teilnimmt.

4. Blatt nach Anspruch 3, dadurch gekennzeichnet, daß der thermoplastische Kunststoff der äußeren Schale (9a, 9b) in der Masse gefärbt ist.

5. Blatt nach einem der Ansprüche 3 und 4, dadurch gekennzeichnet, daß der thermoplastische Kunststoff der äußeren Schale (9a, 9b) mit Mineralfasern oder organischen Fasern verstärkt ist.

6. Blatt nach einem der Ansprüche 1 bis 5, dadurch gekennzeichnet, daß die äußere Schale (9a, 9b) mindestens eine Anti-Verschleiß-Schicht aus einem Faserstoff aus Mineralfasern oder organischen Fasern umfaßt, die mit einem polymerisierten Kunstharz zusammengeballt sind.

7. Blatt nach einem der Ansprüche 1 bis 6, dadurch gekennzeichnet, daß die Schicht aus Formgebungs- und Ausfütterungsmaterial (10a, 10b) aus einem zellulären Material oder aus flexiblem Schaum besteht.

8. Blatt nach einem der Ansprüche 1 bis 7, dadurch gekennzeichnet, daß die Ummantelung (8) aus zwei geschichteten und komplementären Teilen (8a, 8b) besteht, die um den Strukturkern (1) herum zusammengesetzt und miteinander und vorzugsweise auch mit dem Strukturkern (1) verklebt sind.

9. Blatt nach Anspruch 8, dadurch gekennzeichnet, daß die beiden geschichteten und komplementären Teile (8a, 8b) der Ummantelung (8) ein Saugseitenteil (8b) bzw. ein Druckseitenteil (8a) sind, von denen jedes die Saugseitenteile (9b, 10b) bzw. Druckseitenteile (9a, 10a) der äußeren Schale und der Schicht aus Formgebungs- und Ausfütterungsmaterial umfaßt und die in Höhe der Angriffskanten (10c) und Abströmkanten (10d) des Blattes miteinander verklebt sind.

10. Blatt nach einem der Ansprüche 1 bis 9, dadurch gekennzeichnet, daß der Strukturkern (1) einen der Breite des Blattes entsprechenden Querschnitt aufweist, der dem Profil der äußeren Schale (9a, 9b) der Ummantelung (8) genau parallelen Umriß besitzt, wobei die Schicht aus Formgebungs- und Ausfütterungsmaterial (10a, 10b) vorzugsweise eine Folie zum Ausgleich von Toleranzabweichungen zwischen dem Umriß und dem Profil ist.

11. Blatt nach einem der Ansprüche 1 bis 9, dadurch gekennzeichnet, daß der Strukturkern (11) einen der Breite des Blattes entsprechenden Querschnitt, der einen aus Facetten auf Basis einfacher geometrischer Formen wie dreieckiger und viereckiger Formen gebildeten Umriß aufweist, wobei die Schicht (20) aus Formgebungs- und Ausfütterungsmaterial der Ummantelung (18) vorzugsweise eine Matte zum Ausgleich von Formunterschieden zwischen dem Umriß und dem Profil der äußeren Schale (19) der Ummantelung (18) ist.

12. Blatt nach einem der Ansprüche 1 bis 11, dadurch gekennzeichnet, daß der Strukturkern (1) einen zusammengesetzten Mittelholm (5) umfaßt, dessen transversale Enden (5a, 5b) jeweils unter Vermittlung einer zusammengesetzten Sohle (6a, 6b), das eine (5b) gegen die Innenseite des Saugseitenteils und das andere (5a) gegen die Innenseite des Druckseitenteils einer starren arbeitenden Schale (33) des Strukturkerns (1) befestigt sind, wobei der Mittelholm (5) sich entsprechend der Spannweite des Blattes im wesentlichen in der Mitte der Blattbreite, erstreckt und mit der starren arbeitenden Schale (3) und einem Angriffskantenholm (2) des Strukturkerns (1) eine Angriffskantenkammer begrenzt, die mit einem vorderen Ausfütterungselement (7a) für den Kern ausgefüllt ist.

13. Blatt nach Anspruch 12, dadurch gekennzeichnet, daß der Strukturkern (1) auch ein hinteres Ausfütterungselement (7b) umfaßt, das in der starren arbeitenden Schale (3) hinter dem Mittelholm (5) des Kerns (1) angeordnet ist.

14. Blatt nach einem der Ansprüche 1 bis 13, da-durch gekennzeichnet, daß jedes Ausfütterungse-lement (7a, 7b) des Strukturkerns (1) aus einem zellulären Material oder aus Schaumstoff oder aus wabenförmigem Verbundmaterial besteht.

15. Verfahren zur Herstellung eines Blattes gemäß einem der Ansprüche 1 bis 14, dadurch gekennzeichnet, daß man
 – einen Strukturkern (1) in Form einer Primärstruktur herstellt, die alle Strukturelemente des Blattes aufweist, und
 – den Strukturkern (1) mit einer Ummantelung (8) mit Hilfe einer Schicht (10a, 10b) aus einem leichten und flexiblen, nicht arbeitenden Formgebungsmaterial sowie mit einer äußeren starren und dünnen Schale (9a, 9b) umgibt, die entsprechend dem endgültigen aerodynamischen Profil des Blattes profiliert ist.

16. Verfahren nach Anspruch 15, dadurch gekennzeichnet, daß man zur Umhüllung des Strukturkerns (1) mit der Ummantelung (8) um den Strukturkern (1) herum zwei geschichtete komplementäre Teile (8a, 8b) anbringt, die die Ummantelung bilden und von denen jedes ein Teil (10a, 10b) der Schicht aus Formgebungsmaterial und ein Teil (9a, 9b) der äußeren profilierten Schale umfaßt, wobei die beiden geschichteten und komplementären Teile (8a, 8b) miteinander und vorzugsweise auch mit dem Strukturkern (1) verklebt werden.

17. Verfahren nach Anspruch 16, dadurch gekennzeichnet, daß jedes der beiden geschichteten komplementären Teile (8a, 8b) durch Kalandrieren oder Thermoformung des entsprechenden Teiles (9a, 9b) der äußeren profilierten Schale aus thermoplastischem Kunststoff sowie durch Verkleben eines Teils (10, 10b) der Schicht aus Formgebungsmaterial mit der Innenseite des entsprechenden Teils (9a, 9b) der äußeren Schale hergestellt wird.

## Claims

1. Blade made of composite materials, in particular for a rotor of an aerodyne having an at least partially rotating flying surface, characterized by comprising:
 – a structural core (1), preferably of approximate aerodynamic profile, ensuring the structural resistance of the blade, and
 – a covering of cladding (8), surrounding the structural core (1) and comprising:
  – a rigid and thin external shell (9a, 9b), having the desired aerodynamic profile, and
  – a layer (10a, 10b) of a light and flexible, non-stress-bearing conforming material, ensuring the filling between the structural core (1) and the external shell (9a, 9b).

2. Blade according to claim 1, of the type comprising:
 – at least one spar (2) constructed of rovings of fibers having a high mechanical resistance which are agglomerated by a polymerized synthetic resin,
 – a stress-bearing, rigid shell (3), participating in the structural resistance of the blade, and comprising at least one layer of fabric of fibers having a high mechanical resistance which are agglomerated by a polymerized synthetic resin, and
 – at least one filling element (7a, 7b) constructed of a light synthetic material disposed within the stress-bearing shell (3), characterized in that said stress-bearing shell (3), the spar or spars (2) and the filling element or elements (7a, 7b) are assembled in order to constitute said structural core (1).

3. Blade according to one of claims 1 and 2, characterized in that the covering of cladding (8) is a non-stress-bearing covering having an external shell (9a, 9b) constructed of thermoplastic resin not participating in the structural resistance of the blade.

4. Blade according to claim 3, characterized in that the thermoplastic resin of the external shell (9a–9b) is dyed in the mass.

5. Blade according to one of claims 3 and 4, characterized in that the thermoplastic resin of the external shell (9a, 9b) is reinforced with inorganic or organic fibers.

6. Blade according to one of claims 1 to 5, characterized in that the external shell (9a,9b) comprises at least one anti-erosion layer constructed of fabric of inorganic or organic fibers which are agglomerated by a polymerized synthetic resin.

7. Blade according to one of claims 1 to 6, characterized in that said layer of conforming and filling material (10a–10b) is constructed of cellular material or of flexible foam.

8. Blade according to one of claims 1 to 7, characterized in that said covering of cladding (8) consists of two laminated and complementary parts (8a–8b), which are mounted around the structural core (1), and affixed to one another and preferably likewise on the structural core (1).

9. Blade according to claim 8, characterized in that the two laminated and complementary parts (8a, 8b) of the covering of cladding (8) are an upper surface part (8b) and a lower surface part (8a) which each comprise respectively the upper surface (9b, 10b) or lower surface (9a, 10a) parts of the external shell and of the layer of conforming and filling material, and which are affixed to one another at the location of the leding edge (10c) and trailing edge (10d) of the blade.

10. Blade according to one of claims 1 to 9, characterized in that the structural core (1) exhibits a transverse cross-section, along the chord of the blade, haivng a contour substantially parallel to the profile of the external shell (9a, 9b) of the covering of cladding (8), of which the layer of conforming and filling material (10a–10b) is preferably a sheet to compensate for the differences of margin between said contour and said profile.

11. Blade according to one of claims 1 to 9, characterized in that the structural core (11) exhibits a transverse cross-section, along the chord of the blade, having a faceted contour based on simple geometric shapes, such as triangular and quadrangular shapes, the layer (20) of conforming and filling material of the covering of cladding (18) being, preferably, a cushion to compensate for the differences of shapes between said contour and the profile of the external shell (19) of said covering (18).

12. Blade according to one of claims 1 to 11, characterized in that said structural core (1) comprises a composite central spar (5), the transverse ends (5a, 5b) of which are united, each by means of a composite sole (6a, 6b), one (5b) against the interior of the upper surface part and the other (5a) against the interior of the lower surface part of a stress-bearing, rigid shell (3) of said structural core (1), said central spar (5) extending along the span of the blade, substantially at the center of the chord of the latter, and delimiting, together with said stress-bearing, rigid shell (3) and a leading-edge spar (2) of the structural core (1), a leading-edge box filled with a front filling element (7a) of said core.

13. Blade according to claim 12, characterized in that the structural core (1) likewise comprises a rear filling element (7b), disposed within said stress-bearing, rigid shell (3), behind said central spar (5) of said core (1).

14. Blade according to one of claims 1 to 13, characterized in that each filling element (7a, 7b) of said structural core (1) is constructed of a cellular material or of foam, or of laminated honeycomb.

15. Process for manufacturing a blade as according to one of claims 1 to 14, characterized in that it consists:
– in constructing a structural core (1) in the shape of a primary structure including all the structural elements of the blade, and
– in surrounding said structural core (1) with a covering of cladding (8), with the aid of a layer (10a–10b) of a light and flexible, non-stress-bearing conformable material, and with a rigid and thin external shell (9a–9b) which is profiled to the final aerodynamic profile of the blade.

16. Process according to claim 15, characterized in that it consists in surrounding said structural core (1) with said covering of cladding (8) by mounting, around said structural core (1), two complementary laminated parts (8a, 8b) forming said covering and each one of which comprises a part (10a, 10b) of said layer of conforming material and a part (9a, 9b) of said profiled external shell, the two laminated and complementary parts (8a, 8b) being bonded one against the other and preferably likewise on the structural core (1).

17. Process as according to claim 16, characterized in that each one of the two complementary laminated parts (8a, 8b) is made by calendering or thermoforming the corresponding part (9a, 9b) of the profiled exernal shell made of thermoplastic resin, and by bonding a part (10a, 10b) of the layer of conforming material on the internal face of said corresponding part (9a, 9b) of the external shell.

FIG.1

FIG.2

EP 0 296 964 B1

EP 0 296 964 B1

FIG. 3

FIG.4